# EUROPEAN PATENT APPLICATION

(11) **EP 2 693 606 A2**
(43) Date of publication of application: **05.02.2014**
(21) Application number: 13152049.6
(22) Date of filing: 21.01.2013
(51) Int. Cl.: H02K 1/28, H02K 7/00, H02K 1/27

(54) **Rotor, rotating electrical machine, and manufacturing method of the rotor**

(30) Priority: 03.08.2012 JP 2012173064
(71) Applicant: Kabushiki Kaisha Yaskawa Denki, Kitakyushu-Shi Fukuoka 806 (JP)
(72) Inventor: Oka, Takenori, Kitakyushu-shi, Fukuoka 806-0004 (JP); Aoki, Kenichi, Kitakyushu-shi, Fukuoka 806-0004 (JP); Inoue, Kiyomi, Kitakyushu-shi, Fukuoka 806-0004 (JP); Yamagishi, Toshiyuki, Kitakyushu-shi, Fukuoka 806-0004 (JP)
(74) Representative: Viering, Jentschura & Partner

(57) **Abstract**

To provide a rotor, a rotating electrical machine and a manufacturing method of the rotor that manage both high fixing strength and assembling precision as well as realizing operational stability in assembly process.

The rotor 3 includes a rotor core 6 in which a center pore 6a is shaped in the center and a permanent magnet 7 is arranged on the circumference thereof, and a shaft 5, in which a knurling tool shaping part 8a with a knurling tool 9 shaped and a non-knurling tool shaping part 8b without a knurling tool 9 shaped are arranged on the peripheral surface and closely inserted into the center pore 6a such that the center pore 6a and non-knurling tool shaping part 8b are present inside the center pore 6a.

## Description

### BACKGROUND OF THE INVENTION

### FIELD OF THE INVENTION

The present invention relates to a rotor, a rotating electrical machine, and the manufacturing method of the rotor.

### DISCUSSION OF THE BACKGROUND

Conventionally, the rotor in inner-rotor-type rotating electrical machine is manufactured by inserting a shaft into a pore shaped in the center of a rotor core and fixing the rotor core along with the shaft. A method of press-fitting the shaft into the pore has been proposed as a method of fixing the core along with the shaft (for example, refer to Japanese Unexamined Patent Application Publication 2006-187174). Moreover, a method of shaping a knurling tool on the outer circumference of the shaft and inserting it into the pore has also been suggested (for example, refer to Japanese Unexamined Patent Application Publication 2011-254602).

Regarding the method of press-fitting the shaft into the pore, an excessive load is applied to the shaft at press-fitting, which potentially causes misalignment of the shaft. There is a possibility of unevenness occurring in strength and precision as a result of unstable press-fitting. Stoving may also occur between the outer circumference of the shaft and the pore during press-fitting.

Regarding the method of fixing the shaft and the pore by using the knurling tool, the degree of interlocking of the knurling tool to the pore, that is, the amount of protrusion from the circumferential surface of the shaft of the knurling tool must be enhanced in order to ensure sufficient fixing strength. In this case, the relative positional precision of the shaft and the pore worsens, potentially causing misalignment of the shaft.

The present invention has been realized in view of the abovementioned circumstances, and addresses with the exemplary problem thereof to provide a rotor, a rotating electrical machine and a manufacturing method of the rotor that manage both high fixing strength and assembling precision as well as realizing operational stability in assembly process.

### SUMMARY OF THE INVENTION

### Means for Solving the Problems

In order to solve the abovementioned problem, according to one aspect of the present invention, the rotor includes a rotor core in which the pore is shaped in the center and the magnet is arranged on the circumference of the pore, and a shaft, in which, by means of a knurling tool being partially shaped on the peripheral surface, the knurling tool shaping part with the knurling tool shaped and the non-knurling tool shaping part without the knurling tool shaped are arranged on the peripheral surface and closely inserted into the pore such that the knurling tool shaping part and the non-knurling tool shaping part are present inside the pore.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings.
[Fig. 1] shows an exploded perspective view of the motor related to Embodiment 1.
[Fig. 2A] shows an axial sectional view of the rotor included in the motor shown in Fig. 1.
[Fig. 2B] shows a cross-sectional view of the axial orthogonal plane of the rotor shown in Fig. 2A.
[Fig. 3] shows a flow chart describing the manufacturing method of the rotor related to Embodiment 1.
[Fig. 4] shows the process of shaping the knurling tool on the shaft.
[Fig.5] shows a cross-sectional view of the axial orthogonal plane of the rotor in the motor related to Embodiment 2.

### DESCRIPTION OF THE EMBODIMENTS

### [Embodiment 1]

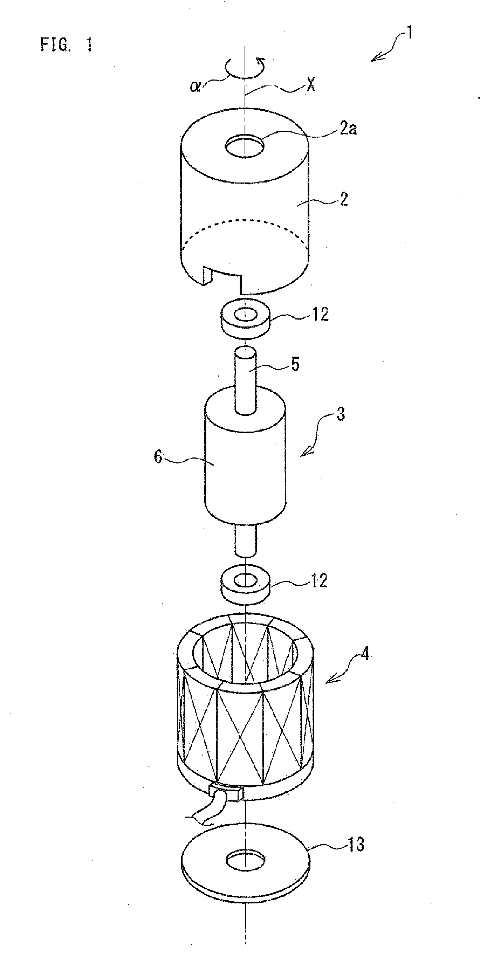

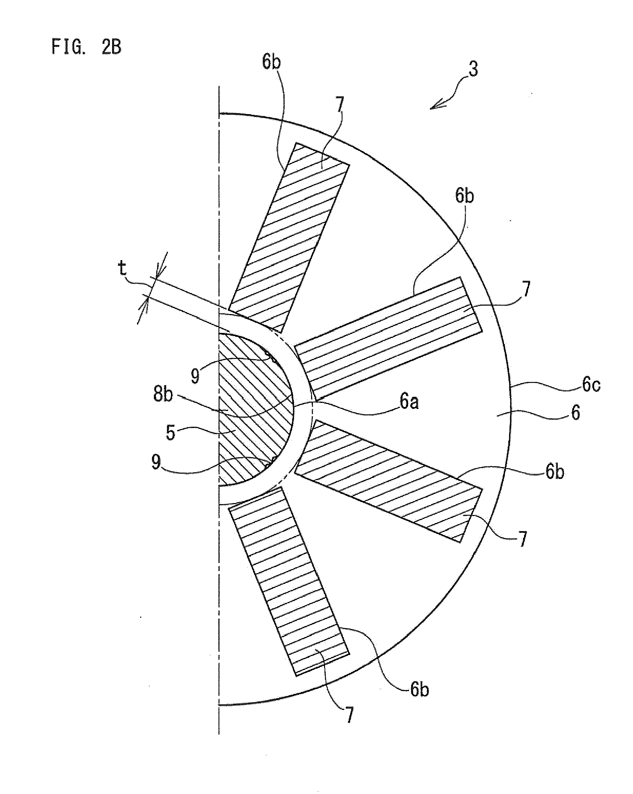

Hereinafter, a motor 1 as a type of the rotating electrical machine related to Embodiment 1 is described with reference to the drawings. Fig. 1 shows an exploded perspective view of the motor 1 related to Embodiment 1. The motor 1 is an inner rotor-type motor. Moreover, it is a PM type motor that uses a permanent magnet 7 (refer to Fig. 2B) as a field magnet with the rotor 3, and particularly, it is an IPM type motor with the permanent magnet 7 arranged inside the rotor core. The motor 1 includes a motor case 2, a rotor (inner rotor) 3, a bearing 12, and a stator (outer stator) 4.

The motor case 2 is a casing configuring the outer wall of the motor 1 with a through hole 2a opening in the upper surface thereof. The rotor 3 is arranged as a field magnet inside the motor case 2. The rotor 3 includes a shaft 5 and a rotor core 6. The bearing 12 is arranged between the motor case 2 and the rotor 3.

The shaft 5 penetrates the center hole of the bearing 12 and the through hole 2a of the motor case 2. The outer ring of the bearing 12 is connected to the motor case 2 and by means of the inner ring of the bearing 12 connected to the shaft 5 of the rotor 3, the entire rotor 3 is made rotatable in the α direction of the arrow in the figure, revolving around the central axis X of the shaft 5 with respect to the motor case 2. The bearing 12 can be configured by being sandwiched between the motor case 2 and the rotor 3 without connecting the bearing 12 to the motor case 2 and/or the rotor 3. A bottom ring 13 covering the bottom surface of the motor case 2 is arranged below the rotor 3. The bearing 12 is also arranged between the rotor 3 and the bottom ring 13 such that it rotatably supports the rotor 3.

Moreover, in the present specifications, for convenience, the vertical direction in Fig. 1 is defined as the vertical direction in the motor 1, using names such as the upper surface, bottom surface, etc. However, needless to say, the vertical direction is not limited to the vertical direction in Fig. 1, depending on the manner in which the motor is used.

The stator 4 as an armature is arranged inside the motor case 2 such that it surrounds the rotor 3 from outside the rotor. The stator 4 includes a plurality of armature coils. The armature coils ensure a constant magnetic space between the permanent magnet of the rotor 3 in addition to being circumferentially as well as seriately arranged on the circumference of the rotor 3. The respective armature coils are connected to an alternating-current power supply corresponding to each phase from among: two-phase, three-phase, or more. When electricity of different phases is electrified in each phase, the rotor 3 rotates due to an electromagnetic induction function.

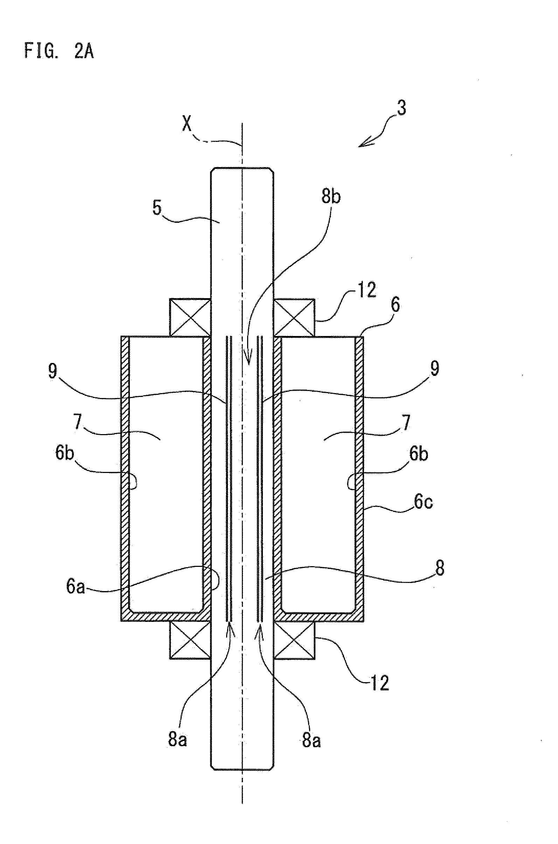

Fig. 2A shows an axial sectional view of the rotor 3 included in the motor 1. Fig. 2B shows a cross-section of the axial orthogonal plane of the rotor 3. Fig. 2B is shown as being partially expanded for convenience of description. Moreover, in Fig. 2A, a hatching is attached to the rotor core 6, while in Fig. 2B, the hatching is attached to the permanent magnet 7 and the shaft 5. The rotor core 6 exhibits a column shape as a whole. Steel is generally used as the material of the rotor core 6; however, a magnetic material, such as silicon steel sheet, etc., may also be applied. A center pore (pore) 6a extending in the central axis X direction is openly shaped in the centre of the rotor core 6. The shaft 5 is inserted into this center pore 6a.

Schematically, the center pore 6a is the same size as the outer diameter of the shaft 5. In Embodiment 1, the shaft is connected to the rotor core 6 by means of shrink-fitting; therefore, the shaft 5 and the center pore 6a have an interference-fit relationship at room temperature. Moreover, when the rotor core 6 is heated to a predetermined temperature during the shrink-fitting process, the shaft 5 and the center pore 6a form a clearance-fit relationship.

A plurality of crevices (open spaces) 6b are shaped between the circumferential surface 6c and the center pore 6a of the rotor core 6, with respective permanent magnets (magnets) 7 arranged inside the crevices 6b thereof. The permanent magnets 7 are circumferentially as well as seriately arranged such that they become alternately heteropolar. Furthermore, the minimum thickness of the rotor core 6 shaped with the center pore 6a and the crevice 6b is determined as t.

The minimum thickness t is adjusted according to the diameter of the shaft 5, the material of the rotor core 6, and the amount of shrink-fitting margin (that is, the difference between the diameter of the shaft 5 and the pore diameter of the center pore 6a at room temperature), and the like. When considering the stress placed on the rotor core 6a due to shrink-fitting, the minimum thickness t is preferably about 1/10 or more of the diameter of the shaft 5 (that is, the pore diameter of the center pore 6a). For example, when the shaft 5 diameter is 10mm, the minimum thickness t is preferably about 1mm or more.

The shaft 5 is the output axis of the motor 1. The shaft 5 is inserted and fixed to the center pore 6a of the rotor core 6, and the rotor 3 is configured with the shaft 5 and the rotor core 6 working in conjunction. The peripheral surface of the shaft 5 located inside the center pore 6a when the shaft 5 is fixed in the rotor core 6 is referred to as the insert region 8. The insert region 8 is located in the part of the mid-way of the shaft 5 in the axial direction and on the peripheral surface.

The insert region 8 is arranged with a knurling tool shaping part 8a and a non-knurling tool shaping part 8b. The knurling tool shaping part 8a is the part of the insert region 8 at which a knurling tool 9 is partially shaped. The non-knurling tool shaping part 8b is the part of the insert region 8 at which a knurling tool 9 is not shaped.

In Embodiment 1, the knurling tool 9 is a concave groove extending in the axial direction throughout the axial-wise length of the insert region 8. One knurling tool shaping part 8a has from one to a plurality of knurling tools 9, arranged so as to extend in the axial direction as a whole. Then, the knurling tool shaping part 8a is discretely arranged in predetermined intervals along the circumferential direction inside the insert region 8. In Embodiment 1, the knurling tool shaping parts 8a are arranged at four locations, that is, at 90° spacing in the circumferential direction. The non-knurling tool shaping part 8b is arranged between the knurling tool shaping part 8a and the knurling tool shaping part 8a, similarly making up four locations.

The height of the knurling tool, that is, the protrusion height in which the circumference of the concaved groove protrudes from the peripheral surface of the shaft 5 due to shaping of the concaved groove thereof, is 50µm or smaller. As described later, the shaft 5 and the rotor core 6 are connected via the shrink-fitting process. The shaft 5 is fixed to the center pore 6a by means of the shrink-fitting process; therefore, even when the knurling tool height is 50µm, the knurling tool 9 sufficiently bites into the center pore 6a. Sufficient bonding strength may be exhibited depending on the knurling tool height of 50µm.

Furthermore, the bonding strength between the shaft 5 and the rotor core 6a by means of the knurling tool 9 changes according to the diameter of the shaft 5 and the height of the knurling tool. When the height of the knurling tool is the same, the bonding strength between the shaft 5 and the rotor core 6a is substantially proportional to the diameter of the shaft 5. Accordingly, in order to realize the same bonding strength, the smaller shaft 5 diameter requires a higher knurling tool. However, from the standpoint of the coaxiality of the shaft 5 and the rotor core 6a, the knurling tool height is preferably small and more preferably, it is 50µm or smaller.

In the motor 1 in this Embodiment 1, both the connection by the knurling tool 9 and the connection by shrink-fitting are used; therefore, compared to the connection by the knurling tool 9 alone, a lower height of the knurling tool may be achieved. Accordingly, the coaxiality of the shaft 5 and the rotor core 6a is enhanced, allowing both to be connected with high positional precision. For example, even when the diameter of the shaft 5 is 10mm, the height of the knurling tool may be made 50µm.

The non-knurling tool shaping part 8b at which the knurling tool 9 is not shaped is present in the insert region 8. There is no unevenness caused in shaping the knurling tool in this non-knurling tool shaping part 8b. The non-knurling tool shaping part 8b is a peripheral surface with high roundness. The peripheral surface of the shaft 5 and the center pore 6a are positioned with high positional precision by means of the non-knurling tool shaping part 8b when the shaft 5 is connected to the rotor core 6. In the rotor 3, strong bonding of the shaft 5 and rotor core 6 by means of the knurling tool shaping part 8a and high positional precision of the shaft 5 and rotor core 6 by means of the non-knurling tool shaping part 8b are both realized.

The position of the knurling tool shaping part 8a is adjusted such that it does not face the crevices 6b. In other words, the positions of the knurling tool shaping parts 8a are adjusted between the crevice 6b and the crevice 6b such that they face in-between. Thereby, unevenness of the knurling tool shaping part 8a is prevented from affecting the part with the minimum thickness t. However, the knurling tool height is 50µm, so even if the knurling tool shaping part 8a and the crevice 6b face each other, the part with minimum thickness t is barely affected.

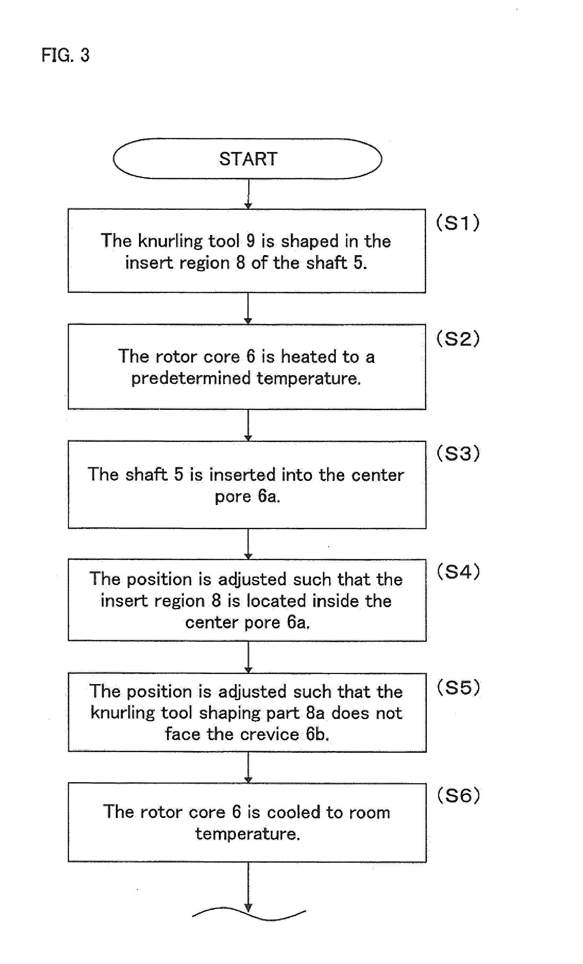

Then, the manufacturing method of the rotor 3 is described. Fig. 3 shows a flow chart describing the manufacturing method of the rotor 3.

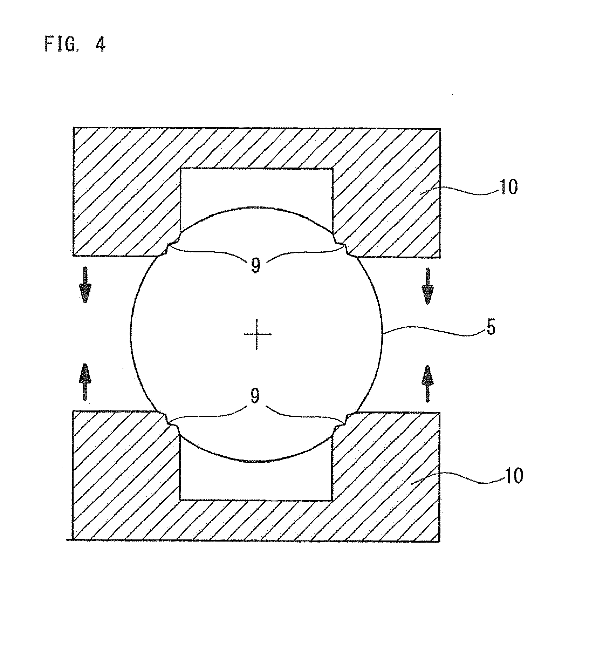

First, the knurling tool 9 is shaped in the insert region 8 of the shaft 5 (S1). Fig. 4 shows the process of shaping the knurling tool 9 on the shaft 5. Fig. 4 shows a cross-sectional view of the axial orthogonal plane of the shaft 5 in the insert region 8. The peripheral surface of the shaft 5 is sandwiched with a knurling tool shaping mold 10 of a presser and high pressure is applied in order to shape the knurling tool 9 on the peripheral surface of the shaft 5. Here, the knurling tool shaping mold 10 is of a blade type in order to shape the concave groove extending in the axial direction. As shown in Fig. 4, by means of shaping the knurling tool 9 in a total of four places using the knurling tool shaping mold 10, the four discrete knurling tool shaping parts 8a and the four discrete non-knurling tool shaping parts 8b are arranged. In Fig. 4, a hatching is added to the knurling tool shaping mold 10.

Subsequently, the shrink-fitting process is commenced. The permanent magnet 7 is already inserted into each of the crevice 6b of the rotor core 6 before the shrink-fitting process is commenced. In the shrink-fitting process, at first, the rotor core 6 is heated to a predetermined temperature (S2). Thereby, the rotor core expands along with the diameter of the center pore 6a. Then, the shaft 5 is inserted into the center pore 6a (S3). Since the center pore 6a diameter is expanded, the shaft 5 can be smoothly inserted. The knurling tool height is 50µm or smaller, thereby the knurling tool 9 is prevented from hindering insertion of the shaft 5.

At this time, the position is adjusted such that the insert region 8 is located inside the center pore 6a (S4). Moreover, the position is adjusted such that the knurling tool shaping part 8a does not face the crevice 6b (S5). Finally, the rotor core 6 is cooled to room temperature (S6). Thereby, manufacturing of the rotor 3 is completed.

### [Embodiment 2]

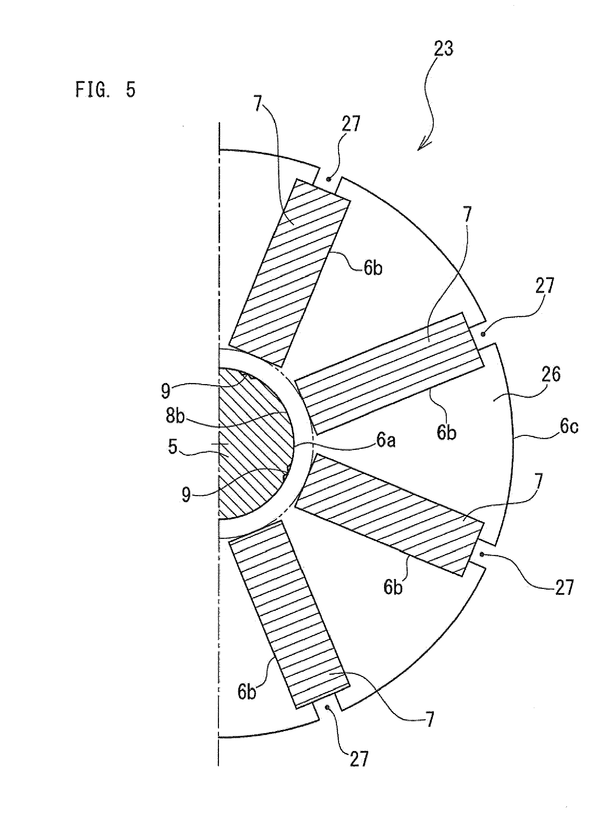

Fig. 5 shows a cross-sectional view of the axial orthogonal plane of the rotor 23 in the motor related to Embodiment 2. Fig. 5 is shown partially expanded for convenience of description. The rotor core 26 of the rotor 23 includes the crevice 6b in the same manner as the rotor core 6 of Embodiment 1; however, the crevice 6b and the circumferential surface 6c are connected by a connection pathway 27. The permanent magnet 7 is arranged inside the crevice 6b in the same manner as Embodiment 1.

The crevice 6b and the circumferential surface 6c are connected by a connection pathway 27; therefore, any inner stress inside the center pore 6a caused due to insertion of the shaft 5 is less prone to remain in the part with a minimum thickness of t. For example, in Embodiment 2, even if the knurling tool shaping part 8a of the shaft 5 faces the crevice 6b, the effect of unevenness of knurling tool 9 on the part of a minimum thickness t is still less.

As above, the embodiments of the present invention have been described in the above; however, the present invention is not limited to them, and various arrangements and modifications are possible within the range of the spirit thereof.

The number of knurling tool shaping parts 8a is preferably in multiples of four, such as four, eight, etc.; however, of course, it is not limited to this. Moreover, in the Embodiment 1, a case has been described in which the knurling tool 9 is a concaved groove extending in the axial direction, but the mode of the knurling tool 9 is also not limited to this. It may be a concaved groove diagonally extending in the axial direction or it may be a ramified knurling tool.

Furthermore, various motors such as a servo motor, an induction motor, a stepping motor, etc. may be applied as the motor 1. Moreover, as the rotor 3 as the field magnet, a VR type, a hybrid type, etc. may be considered in addition to the SPM type, IPM type, etc. of the PM type. Furthermore, the spirit of the present invention may be applied not only to the motor but to general rotating electrical machine having a generator with a rotor of the same configuration as the motor.

The knurling tool shaping part may be discretely shaped in predetermined intervals in the circumferential direction of the shaft such that it extends in the axial direction of the shaft.

The number of knurling tool shaping parts arranged may be in multiples of four.

The knurling tool may be a concaved groove extending in the axial direction of the shaft.

The degree of protrusion of the knurling tool from the peripheral surface of the shaft may be 50µm or less.

The open area for inserting the magnet inside the rotor core may be shaped between the circumferential surface of the rotor core and the pore, with the shaft inserted into the pore such that the knurling tool shaping part does not face the open area.

The open area may be connected to the circumferential surface of the rotor core.

According to another aspect of the present invention, the manufacturing method of the rotor includes the rotor and the stator arranged on the circumference of the rotor. The rotating electrical machine may be, for example, an electric motor or a generator.

Furthermore, according to another aspect of the present invention, the manufacturing method of the rotor includes the steps of arranging the knurling tool shaping part with the knurling tool shaped and the non-knurling tool shaping part without the knurling tool shaped on the peripheral surface of the shaft by partially shaping the knurling tool on the peripheral surface of the shaft and creating the knurling tool shaping part and the non-knurling tool shaping part inside the pore by heating the rotor core with the pore for inserting the shaft shaped in the middle and carrying out shrink-fitting processing for inserting the shaft into the hole.

The rotor manufacturing method may further include the steps of shaping the open area for inserting the magnet inside the rotor core between the circumferential surface of the rotor core and the pore and inserting the shaft into the pore such that the knurling tool shaping part does not face the open area.

Obviously, numerous modifications and variations of the present invention are possible in light of the above teachings. It is therefore to be understood that within the scope of the appended claims, the invention may be practiced otherwise than as specifically described herein.

According to the present invention, the rotor, the rotating electrical machine, and the manufacturing method of the rotor that manage both high fixing strength and high assembling precision as well as realizing operational stability in assembly process can be provided.

## Claims

1. A rotor comprising:
a rotor core in which a pore is shaped in the center and a magnet is arranged on the circumference of the pore; and,
a shaft, wherein, by means of a knurling tool being partially shaped on the peripheral surface, a knurling tool shaping part with the knurling tool shaped and a non-knurling tool shaping part without the knurling tool shaped are arranged on the peripheral surface and closely inserted into the pore such that the knurling tool shaping part and the non-knurling tool shaping part are present inside the pore.

2. The rotor according to Claim 1, wherein
the knurling tool shaping part is discretely shaped at scheduled intervals in the circumferential direction of the shaft such that it extends along the axial direction of the shaft.

3. The rotor according to Claim 1 or Claim 2, wherein
the number of the knurling tool shaping parts arranged is a multiple of four.

4. The rotor according to any one of Claims 1 to 3, wherein
the knurling tool is a concaved groove extending in the axial direction of the shaft.

5. The rotor according to any one of Claims 1 to 4, wherein
the protrusion of the knurling tool from the peripheral surface of the shaft is 50µm or less.

6. The rotor according to any one of Claims 1 to 5, wherein
an open area for inserting the magnet inside the rotor core exists between the circumferential surface of the rotor core and the pore, and
the shaft is inserted in the pore such that the knurling tool shaping part does not
face the open area.

7. The rotor according to Claim 6, wherein
the open area is connected to the circumferential surface of the rotor core.

8. A rotating electrical machine comprising:
the rotor according to any one of Claims 1 to 7; and,
a stator arranged on the circumference of the rotor.

9. The rotating electrical machine according to Claim 8, wherein
the rotating electrical machine is a motor.

10. The rotating electrical machine according to Claim 8, wherein
the rotating electrical machine is a generator.

11. A manufacturing method of the rotor, comprising the steps of:
arranging the knurling tool shaping part at which the knurling tool shaped and the non-knurling tool shaping part at which the knurling tool is not shaped on the peripheral surface of the shaft by means of partially shaping the knurling tool on the peripheral surface of the shaft; and,
creating the knurling tool shaping part and the non-knurling tool shaping part inside the pore by heating the rotor core with the pore for inserting the shaft shaped in the middle and carrying out shrink-fitting processing for inserting the shaft in the hole.

12. The manufacturing method of the rotor according to Claim 11, further comprising the steps of:
shaping the open area for inserting the magnet inside the rotor core between the circumferential surface of the rotor core and the pore; and,
inserting the shaft into the pore such that the knurling tool shaping part does not face the open area.
